(19) Europäisches Patentamt
European Patent Office
Office européen des brevets

(11) **EP 4 783 442 A1**

(12) **EUROPEAN PATENT APPLICATION**

(43) Date of publication:
**29.07.2026   Bulletin 2026/31**

(21) Application number: 26151815.3

(22) Date of filing: **14.01.2026**

(51) International Patent Classification (IPC):
**H02M 1/32** (2007.01)   **H02M 7/219** (2006.01)
**H02H 3/26** (2006.01)   **H02H 3/36** (2006.01)
**H02M 1/00** (2006.01)   **H02M 7/487** (2007.01)
**H02H 3/38** (2006.01)

(52) Cooperative Patent Classification (CPC):
**H02M 7/219; H02H 3/26; H02H 3/36; H02M 1/32;**
H02H 3/38; H02M 1/007; H02M 1/008; H02M 7/487

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  24.01.2025  CN 202510121425

(71) Applicant: **Huawei Technologies Co., Ltd.
Shenzhen, Guangdong 518129 (CN)**

(72) Inventors:
• **Liu, Yifan**
  **Shenzhen, 518129 (CN)**
• **Hu, Biao**
  **Shenzhen, 518129 (CN)**
• **He, Xinliang**
  **Shenzhen, 518129 (CN)**
• **Wu, Xinye**
  **Shenzhen, 518129 (CN)**

(74) Representative: **Epping - Hermann - Fischer
Patentanwaltsgesellschaft mbH
Schloßschmidstraße 5
80639 München (DE)**

(54) **AC/DC CONVERTER AND CHARGING DEVICE**

(57)    This application provides an AC/DC converter and a charging device, and pertains to the field of power electronics technologies. The AC/DC converter includes a controller and a multi-phase AC/DC conversion circuit. In each phase of AC/DC conversion circuit, a current flowing through a first winding of an autotransformer is a first current, and a current flowing through a second winding of the autotransformer is a second current. When a current difference between the first current and the second current in any phase of AC/DC conversion circuit is greater than or equal to a current threshold, the controller can determine that a fault exists in the phase of AC/DC conversion circuit, and turn off a switch in the multi-phase AC/DC conversion circuit, to implement fault isolation. In the foregoing solution, fault detection can be implemented based on a current flowing through the autotransformer, and fault isolation can be implemented by turning off the switch in the AC/DC conversion circuit. Therefore, no additional power switching device needs to be added to the AC/DC converter, and both structural complexity and hardware costs of the AC/DC converter are low.

FIG. 1

## Description

## TECHNICAL FIELD

This application relates to the field of power electronics technologies, and in particular, to an AC/DC converter and a charging device.

## BACKGROUND

A charging pile usually includes a plurality of alternating current/direct current (alternating current/direct current, AC/DC) converters, a plurality of DC/DC converters, and a plurality of charging connectors. Alternating current ends of the plurality of AC/DC converters are all configured to be connected to a power grid, and direct current ends of the plurality of AC/DC converters are connected to a plurality of charging connectors through a plurality of DC/DC converters. In addition, the direct current ends of the plurality of AC/DC converters are connected in parallel. Because the direct current ends of the plurality of AC/DC converters are connected in parallel, when a short-circuit fault occurs in any AC/DC converter, the fault is likely to spread to the entire charging pile. To avoid fault spreading, a power switching device (for example, a switching transistor) is usually added at a direct current end of each AC/DC converter. When a short-circuit fault occurs in any AC/DC converter, a power switching device connected to a direct current end of the AC/DC converter may be turned off, to isolate other AC/DC converters of the faulty AC/DC converter.

However, in the foregoing fail-safe solution, an additional power switching device needs to be added, and consequently, structural complexity and hardware costs of the charging pile are increased.

## SUMMARY

This application provides an AC/DC converter and a charging device, to resolve a problem that if a short-circuit fault occurs in any AC/DC converter when a plurality of AC/DC converters in a charging device are connected in parallel, the faulty AC/DC converter is isolated in time, and also resolve a technical problem that a power switching device needs to be added and this results in relatively high structural complexity and hardware costs of the charging device. According to a first aspect, an AC/DC converter is provided. The AC/DC converter includes a controller and a multi-phase AC/DC conversion circuit. Each phase of AC/DC conversion circuit includes a switch, an inductor, an autotransformer, a first rectifier bridge arm, and a second rectifier bridge arm, and the autotransformer includes a first winding and a second winding. One end of the switch is configured to be connected to an alternating current power supply, the other end of the switch is connected to one end of the inductor, the other end of the inductor is separately connected to one end of the first winding and one end of the second winding, the other end of the first winding is connected to the first rectifier bridge arm, and the other end of the second winding is connected to the second rectifier bridge arm. The controller is configured to turn off the switch in the multi-phase AC/DC conversion circuit when a current difference between a first current and a second current in any phase of AC/DC conversion circuit is greater than or equal to a current threshold. The first current is a current flowing through the first winding in the any phase of AC/DC conversion circuit, and the second current is a current flowing through the second winding in the any phase of AC/DC conversion circuit.

When each phase of AC/DC conversion circuit runs normally, all the phases of AC/DC conversion circuits have equal or approximately equal first currents and equal or approximately equal second currents. Therefore, when detecting that the current difference between the first current and the second current in any phase of AC/DC conversion circuit is greater than or equal to the current threshold, the controller may determine that a fault exists in the phase of AC/DC conversion circuit. Correspondingly, the controller may disconnect the faulty AC/DC converter from the alternating current power supply by turning off the switch in each phase of AC/DC conversion circuit, so as to isolate the faulty AC/DC converter from other normal AC/DC converters, thereby avoiding fault spreading. In addition, in the solution provided in this application, fault detection can be implemented based on a current flowing through the autotransformer, and fault isolation can be implemented by turning off the switch in the AC/DC conversion circuit. Therefore, no additional power switching device needs to be added to the AC/DC converter, and both structural complexity and hardware costs of the AC/DC converter are low.

In an embodiment, the current threshold is greater than or equal to 1/10 of a current flowing through the autotransformer when the AC/DC converter outputs a rated power. The current flowing through the autotransformer may be a sum of the current flowing through the first winding and the current flowing through the second winding. By setting the current threshold to be greater than 1/10 of a rated current flowing through the autotransformer when the AC/DC converter outputs the rated power, false detection of a fault may be effectively avoided.

In an embodiment, each of the first rectifier bridge arm and the second rectifier bridge arm includes at least one switching transistor. The controller is configured to first turn off the switching transistor in the multiphase AC/DC conversion circuit, and then turn off the switch in the multi-phase AC/DC conversion circuit.

It may be understood that, the switching transistor in the multi-phase AC/DC conversion circuit is turned off, so that a current flowing through each phase of AC/DC conversion circuit can be reduced, and then, a current flowing through the switch in each phase of AC/DC conversion circuit can be reduced. It may be further understood that, when the controller turns off the switch, when the current flowing through the switch is relatively large, contacts of the switch may be stuck, and consequently, fault isolation fails. In the solution provided in this application, the switching transistor in the multi-phase AC/DC conversion circuit is first turned off, so as to ensure that when the switch in each phase of AC/DC conversion circuit is turned off, a current flowing through each switch is relatively small, thereby ensuring that each switch can be effectively turned off. In this way, effective isolation of the faulty AC/DC converter can be implemented.

In an embodiment, the controller is configured to turn off the switch in the multi-phase AC/DC conversion circuit when a turn-off duration of the switching transistor reaches a duration threshold.

In the solution provided in this application, when the turn-off duration of the switching transistor reaches the duration threshold, a current flowing through the switch is less than a specific threshold, and the threshold may be less than or equal to a maximum breaking current of the switch. In this case, the controller further controls all switches in the multi-phase AC/DC conversion circuit to be turned off, effectively avoiding damage to the switches.

In an embodiment, the duration threshold is on an order of magnitude of microseconds, milliseconds, or seconds. Because the duration threshold is relatively small, that is, the controller may turn off the switch in the multi-phase AC/DC conversion circuit after turning off the switching transistor for a relatively short time. Therefore, it can be ensured that the faulty AC/DC converter is isolated from the alternating current power supply in time, to effectively protect another AC/DC converter in the system.

In an embodiment, after turning off the switching transistor in the multi-phase AC/DC conversion circuit, the controller may control all the switches in the multi-phase AC/DC conversion circuit to be turned off when detecting that the current flowing through the switch in the any phase of AC/DC conversion circuit is less than the maximum breaking current of the switch. Therefore, damage to the switch can be effectively avoided, and fault isolation can also be implemented in a timely and effective manner.

In an embodiment, after turning off the switching transistor in the multi-phase AC/DC conversion circuit, the controller may control all the switches in the multi-phase AC/DC conversion circuit to be turned off when detecting that the current flowing through the switch in each phase of AC/DC conversion circuit is less than the maximum breaking current of the switch. In this way, damage to the switch in each phase of AC/DC conversion circuit can be effectively avoided, and fault isolation can be effectively implemented.

In an embodiment, the AC/DC converter further includes a positive direct current bus, a negative direct current bus, a first bus capacitor, and a second bus capacitor. Each of the first rectifier bridge arm and the second rectifier bridge arm is further separately connected to the positive direct current bus and the negative direct current bus, and the first bus capacitor and the second bus capacitor are connected in series and connected between the positive direct current bus and the negative direct current bus. The controller is configured to turn off the switch in the multi-phase AC/DC conversion circuit when the current difference between the first current and the second current in the any phase of AC/DC conversion circuit is greater than or equal to the current threshold, and a voltage difference between a first half-bus voltage and a second half-bus voltage is greater than or equal to a voltage threshold. The first half-bus voltage is a voltage between the positive direct current bus and a bus midpoint, and the second half-bus voltage is a voltage between the negative direct current bus and the bus midpoint. The bus midpoint is a series connection node between the first bus capacitor and the second bus capacitor.

It may be understood that, when a fault occurs in any phase of AC/DC conversion circuit, a fault current in the faulty AC/DC conversion circuit charges one of the first bus capacitor and the second bus capacitor, and then, this causes an obvious deviation between the first half-bus voltage and the second half-bus voltage. In the solution provided in this application, because the controller can use both the difference between the auto-coupled currents and the difference between the half-bus voltages as a reference for fault determining, accuracy of fault detection can be effectively improved, and a probability of false triggering of a fail-safe action (to be specific, an action of turning off a switch) can be reduced.

In an embodiment, the voltage threshold Vt meets $\frac{Vt}{2} < V1 - V2$. The formula may alternatively be transformed into Vt < 2 × (V1 - V2). V1 is a smaller value of a withstand voltage value of the first bus capacitor and a withstand voltage value of the second bus capacitor, V2 is a rated half-bus voltage, and the rated half-bus voltage is half of a rated voltage between the positive direct current bus and the negative direct current bus. V1 is also referred to as a target withstand voltage value.

It may be understood that the rated half-bus voltage V2 is a rated voltage of each bus capacitor, in other words, rated voltages of two bus capacitors are equal. In addition, the rated voltage is less than a withstand voltage value of any bus capacitor, in other words, the rated voltage is less than the target withstand voltage value V1. It may be further understood that the withstand voltage value of the bus capacitor may be a maximum voltage that the bus capacitor can withstand, and the withstand voltage value may also be referred to as a minimum breakdown voltage of the bus capacitor. In other words, when a voltage at two ends of any bus capacitor exceeds a withstand voltage value of the bus capacitor, there may be a risk of overvoltage breakdown of the bus capacitor.

When a fault occurs in any phase of AC/DC conversion circuit, a voltage at two ends of the first bus capacitor or a voltage at two ends of the second bus capacitor or both change relative to the rated half-bus voltage V2. If the changed voltage is less than the target withstand voltage value V1, overvoltage breakdown of the bus capacitor may be avoided. To be specific, for each bus capacitor, if a variation of a voltage at two ends of the bus capacitor relative to the rated half-bus voltage V2 is less than (V1 - V2), overvoltage breakdown of the bus capacitor may be avoided. In addition, when a fault occurs in any phase of AC/DC conversion circuit, a voltage at two ends of one of the first bus capacitor and the second bus capacitor rises relative to the rated half-bus voltage V2, and a voltage at two ends of the other bus capacitor drops relative to the rated half-bus voltage V2. Therefore, the voltage threshold Vt/2 + V2 < V1 is set, in other words, Vt < 2 × (V1 - V2), so that it may be ensured that a switch in the multi-phase AC/DC conversion circuit is turned off in time before a voltage at two ends of any bus capacitor reaches the target withstand voltage value V1. Therefore, it may be ensured that a voltage at two ends of each bus capacitor is within a tolerance range of the bus capacitor, thereby effectively reducing a risk of overvoltage breakdown of the bus capacitor.

According to a second aspect, a charging device is provided. The charging device includes the AC/DC converter provided in the first aspect, a DC/DC converter, and a charging connector, and an output end of the AC/DC converter is connected to the charging connector through the DC/DC converter. The charging connector may be configured to be connected to an electric vehicle.

The AC/DC converter is configured to convert an alternating current provided by an alternating current power supply into a direct current. The DC/DC converter is configured to perform voltage conversion on the direct current output by the AC/DC converter, and output a converted direct current to the charging connector, to supply power to the electric vehicle connected to the charging connector.

In conclusion, this application provides an AC/DC converter and a charging device. The AC/DC converter includes a controller and a multi-phase AC/DC conversion circuit. In each phase of AC/DC conversion circuit, a current flowing through a first winding of an autotransformer is a first current, and a current flowing through a second winding of the autotransformer is a second current. When a current difference between the first current and the second current in any phase of AC/DC conversion circuit is greater than or equal to a current threshold, the controller can determine that a fault exists in the phase of AC/DC conversion circuit, and then turn off a switch in the multi-phase AC/DC conversion circuit. Therefore, the faulty AC/DC converter can be disconnected from the alternating current power supply, so as to isolate the faulty AC/DC converter from other normal AC/DC converters, thereby avoiding fault spreading. In addition, in the solution provided in this application, fault isolation can be directly implemented by using the switch in the multi-phase AC/DC conversion circuit. Therefore, no additional power switching device needs to be added to the AC/DC converter, and both structural complexity and hardware costs of the AC/DC converter are low.

**BRIEF DESCRIPTION OF DRAWINGS**

FIG. 1 is a diagram of a structure of a charging device according to an embodiment of this application;
FIG. 2 is a diagram of a structure of another charging device according to an embodiment of this application;
FIG. 3 is a schematic of a structure of still another charging device according to an embodiment of this application;
FIG. 4 is a schematic of a structure of an AC/DC converter according to an embodiment of this application;
FIG. 5 is a diagram of software protection logic of an AC/DC converter according to an embodiment of this application;
FIG. 6 is a schematic of a local structure of an AC/DC converter according to an embodiment of this application;
FIG. 7 is a diagram of software protection logic of another AC/DC converter according to an embodiment of this application;
FIG. 8 is a schematic of a current path of a short-circuit current in an AC/DC converter according to an embodiment of this application;
FIG. 9 is a schematic of a current path of a short-circuit current in another AC/DC converter according to an embodiment of this application; and
FIG. 10 is a schematic of a current loop path in a charging device according to an embodiment of this application.

**DESCRIPTION OF EMBODIMENTS**

The following describes in detail an AC/DC converter and a charging device provided in embodiments of this application with reference to the accompanying drawings.

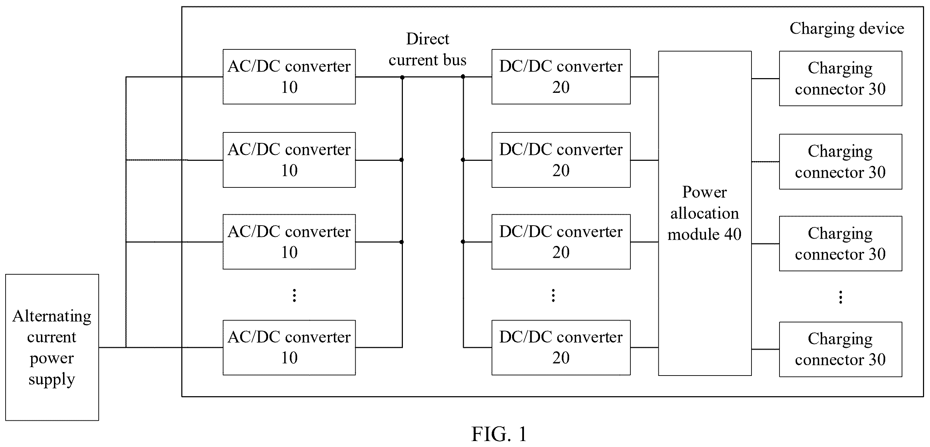

FIG. 1 is a diagram of a structure of a charging device according to an embodiment of this application. In FIG. 1, an example in which the charging device is a charging pile is used for illustration. As shown in FIG. 1, the charging device includes a plurality of AC/DC converters 10, and alternating current ends (also referred to as input ends) of the plurality of AC/DC converters 10 are configured to be connected to an alternating current power supply, for example, are configured to be connected to a power grid. Direct current ends (also referred to as output ends) of the plurality of AC/DC converters 10 are connected in parallel to a direct current bus. Each AC/DC converter 10 in the multiple AC/DC converters 10 is configured to convert an alternating current provided by an alternating current power supply into a direct current, and output the direct current to the direct current bus. The AC/DC converter 10 may also be referred to as an AC/DC module or a rectifier module. Because a topology of the AC/DC converter 10 is a non-isolated topology, and the direct current ends of the plurality of AC/DC converters 10 are connected in parallel, the foregoing architecture is also referred to as a non-isolated architecture or a non-isolated charging architecture.

As shown in FIG. 1, the charging device may further include a plurality of DC/DC converters 20 and a plurality of charging connectors 30. Ends of the plurality of DC/DC converters 20 are connected in parallel to the direct current bus, and the other ends of the plurality of DC/DC converters 20 are connected to the plurality of charging connectors 30. For example, with reference to FIG. 1, the charging device further includes a power allocation module 40, and the other ends of the plurality of DC/DC converters 20 are connected to the plurality of charging connectors 30 through the power allocation module 40. The plurality of DC/DC converters 20 are configured to perform voltage conversion on a direct current on the direct current bus. The power allocation module 40 is configured to allocate an output power of at least one DC/DC converter 20 of the plurality of DC/DC converters 20 to at least one charging connector 30 of the plurality of charging connectors 30. Each charging connector 30 is configured to be connected to an electric vehicle, and is configured to charge the electric vehicle.

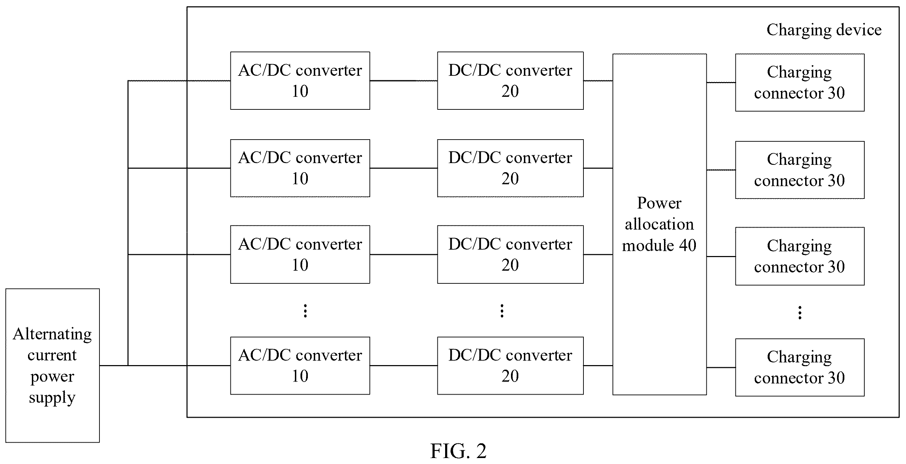

FIG. 1 is described by using an example in which an output end of the AC/DC converter 10 is connected to the DC/DC converter 20 through the direct current bus. To be specific, output ends of the plurality of AC/DC converters 10 are connected in parallel to the direct current bus, and then, ends of the plurality of DC/DC converters 20 are connected in parallel to the direct current bus. It may be understood that, as shown in FIG. 2, the output end of the AC/DC converter 10 may alternatively be directly connected to one end of the DC/DC converter 20. For example, with reference to FIG. 2, output ends of the plurality of AC/DC converters 10 are connected to ends of the plurality of DC/DC converters 20 in a one-to-one correspondence.

It may be further understood that the AC/DC converter 10 and the DC/DC converter 20 in the charging device may be converters independent of each other, or the DC/DC converter 20 may be integrated into the AC/DC converter 10. In other words, the AC/DC converter 10 not only has an AC/DC conversion function, but also has a DC/DC conversion function. Accordingly, the DC/DC converter 20 does not need to be separately disposed in the charging device.

In the foregoing charging device, a fault inside a single AC/DC converter 10 is likely to spread to another AC/DC converter 10 in the charging device, and this causes damage to the another AC/DC converter 10. Therefore, how to implement fault isolation in a single AC/DC converter 10 is a key factor for ensuring reliability of the entire charging device.

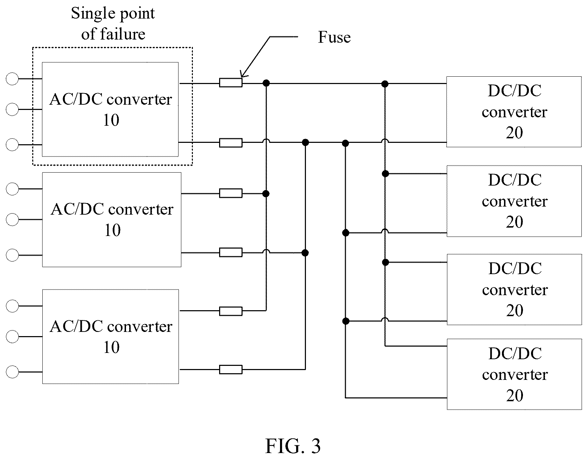

In some embodiments, as shown in FIG. 3, a fuse is usually added between a direct current end (that is, an output end) of each AC/DC converter 10 and the direct current bus. When a fault occurs in an AC/DC converter 10, in other words, after a single point of failure occurs in the charging device, remaining AC/DC converters 10 can sink a current into an output end of the faulty AC/DC converter 10, to blow a fuse connected to the output end of the faulty AC/DC converter 10. In this way, the faulty AC/DC converter 10 can be isolated from other AC/DC converters 10. However, in this solution, it needs to be ensured that, when the current is sunk into an AC/DC converter 10 other than the faulty AC/DC converter 10, a fuse connected to the faulty AC/DC converter 10 can be blown, and the fuse connected to the output end of the AC/DC converter 10 cannot be blown. In other words, in this solution, the AC/DC converters 10 need to cooperate with each other, and a requirement on a current equalization coefficient of a system (namely, the charging device) is high.

In some other embodiments, a power switching device (for example, a switching transistor or a diode) can be further added between a direct current end of each AC/DC converter 10 and the direct current bus. The AC/DC converter 10 performs software protection by identifying an abnormal voltage or an abnormal current. The software protection means turning off the power switching device to isolate the AC/DC converter 10 from other AC/DC converters 10. However, in this solution, an additional power switching device needs to be added, and consequently, structural complexity and hardware costs of the charging device are increased. In addition, to ensure an effect of fault isolation, a power switching device with a high power, a low loss, and a fast response is usually required, and costs of the power switching device that meets these conditions are relatively high.

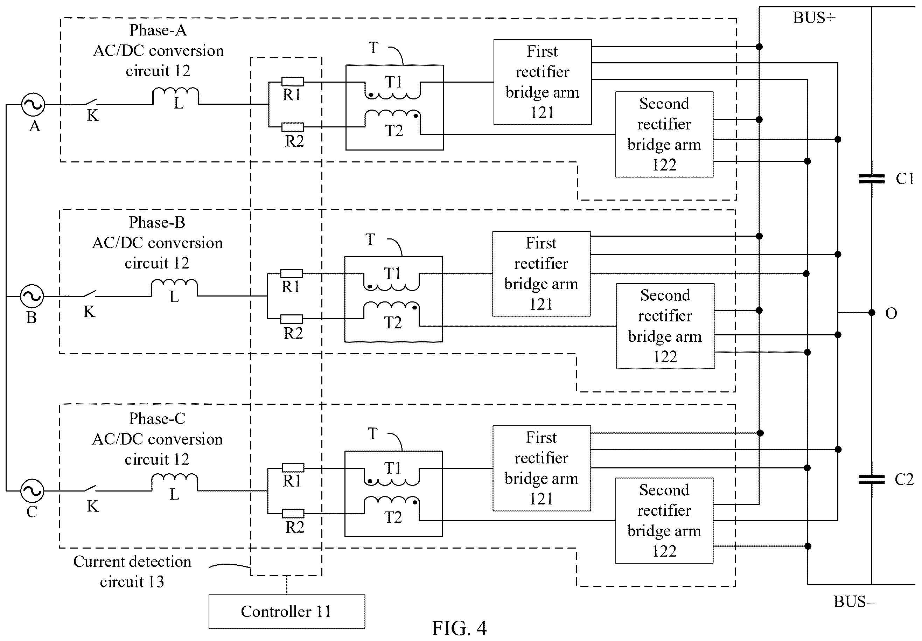

An embodiment of this application provides an AC/DC converter. The AC/DC converter may be applied to an application scenario shown in FIG. 1. When a fault occurs in the AC/DC converter, fault isolation from another AC/DC converter can be performed on the AC/DC converter, so as to prevent a single point of failure from spreading. As shown in FIG. 4, the AC/DC converter provided in this embodiment of this application includes a controller 11 and a multi-phase AC/DC conversion circuit 12. For example, FIG. 4 schematically shows a three-phase AC/DC conversion circuit 12.

Each phase of AC/DC conversion circuit 12 includes a switch K, an inductor L, an autotransformer T, a first rectifier bridge arm 121, and a second rectifier bridge arm 122. The autotransformer T includes a first winding T1 and a second winding T2. Each of the first rectifier bridge arm 121 and the second rectifier bridge arm 122 includes at least one switching transistor.

Still with reference to FIG. 4, one end of the switch K is configured to be connected to an alternating current power supply, and the other end of the switch K is connected to one end of the inductor L. The other end of the inductor L is separately connected to one end of the first winding T1 and one end of the second winding T2. The other end of the first winding T1 is connected to the first rectifier bridge arm 121, and the other end of the second winding T2 is connected to the second rectifier bridge arm 122. The switch K is also referred to as an upstream switch.

It may be understood that the AC/DC converter may further include a direct current bus. As shown in FIG. 4, the direct current bus includes a positive direct current bus BUS+ and a negative direct current bus BUS-. An alternating current end (that is, one end of the switch K) of each phase of AC/DC conversion circuit 12 may be configured to receive one-phase alternating current in the alternating current power supply, and a direct current end (that is, a bus end of the first rectifier bridge arm 121 and the second rectifier bridge arm 122) of each phase of AC/DC conversion circuit 12 is connected to a direct current bus. Each phase of AC/DC conversion circuit 12 is configured to convert a received one-phase alternating current into a direct current and output the direct current to the direct current bus. As shown in FIG. 4, it is assumed that the alternating current power supply is used to provide a three-phase (namely, a phase A, a phase B, and a phase C) alternating current, the AC/DC converter may include AC/DC conversion circuits 12 of the three phases corresponding to the three-phase alternating current, namely, a phase-A AC/DC conversion circuit 12, a phase-B AC/DC conversion circuit 12, and a phase-C AC/DC conversion circuit 12. Alternatively, the AC/DC converter may not need to include a direct current bus, and the direct current end of each phase of AC/DC conversion circuit 12 may be directly connected to the DC/DC converter.

The controller 11 is configured to turn off the switch K in the multi-phase AC/DC conversion circuit 12 when a current difference between a first current and a second current in any phase of AC/DC conversion circuit 12 is greater than or equal to a current threshold. The current difference may be an absolute value of a difference obtained by subtracting the second current from the first current. The first current is a current flowing through the first winding T1 in the any phase of AC/DC conversion circuit 12, and the second current is a second current flowing through the second winding T2 in the any phase of AC/DC conversion circuit 12. The first current and the second current may also be referred to as auto-coupled currents.

It may be further understood that, when each phase of AC/DC conversion circuit 12 runs normally, the first current flowing through the first winding T1 is equal to or approximately equal to the second current flowing through the second winding T2. In other words, in a normal case, the current difference between the first current and the second current is zero or close to zero. When a fault occurs in one phase of AC/DC conversion circuit 12, for example, when a switching transistor in the first rectifier bridge arm 121 or the second rectifier bridge arm 122 is short-circuited or open-circuited, there is a large difference between the first current flowing through the first winding T1 and the second current flowing through the second winding T2, in other words, the current difference between the first current and the second current becomes large.

In this embodiment of this application, the controller 11 may prestore the current threshold. In addition, the current threshold may be determined based on a change range of the current difference between the first current and the second current when the AC/DC conversion circuit 12 runs normally. For example, the current threshold may be greater than an upper limit of the change range.

In an embodiment, the current threshold may be greater than or equal to 1/10 of the current flowing through the autotransformer T when the AC/DC converter outputs a rated power. The current flowing through the autotransformer T may be a sum of the current flowing through the first winding T1 and the current flowing through the second winding T2. By setting the current threshold to be greater than 1/10 of a rated current flowing through the autotransformer T when the AC/DC converter outputs the rated power, false detection of a fault may be effectively avoided. It may be understood that, when the AC/DC converter outputs the rated power, in other words, when the AC/DC converter works at the rated power, currents flowing through autotransformers T in all the phases of AC/DC conversion circuits 12 are equal.

It may be learned from the foregoing analysis that, when detecting that the current difference between the first current and the second current in the any phase of AC/DC conversion circuit 12 is greater than or equal to the current threshold, the controller 11 may determine that a fault occurs in the phase of AC/DC conversion circuit 12, and then turn off a switch K in the multi-phase AC/DC conversion circuit 12. In this way, the faulty AC/DC converter may be isolated from the alternating current power supply, so as to effectively isolate the faulty AC/DC converter from other AC/DC converters in the system (for example, the charging device), thereby avoiding damage to the other AC/DC converters caused by fault spreading.

In addition, the AC/DC converter provided in this embodiment of this application can implement fault detection based on a current flowing through the autotransformer, and implement fault isolation by turning off the switch in the AC/DC conversion circuit. Therefore, fail-safe can be implemented without adding another fault detection and protection device to the AC/DC converter, and both structural complexity and hardware costs of the AC/DC converter are low. In addition, when performing fault isolation, the AC/DC converter does not need to cooperate with another AC/DC converter, and a requirement on a current equalization coefficient of the system is relatively low.

In an embodiment, still with reference to FIG. 4, the AC/DC converter further includes a current detection circuit 13. The current detection circuit 13 is configured to detect the first current and the second current in each phase of AC/DC conversion circuit 12. Correspondingly, the controller 11 is configured to obtain the first current and the second current that are in each phase of AC/DC conversion circuit 12 and that are detected by the current detection circuit 13.

In an embodiment, still with reference to FIG. 4, the AC/DC converter further includes a first bus capacitor C1 and a second bus capacitor C2 that are connected in series and connected between the positive direct current bus BUS+ and the negative direct current bus BUS-. In addition, a series connection node between the first bus capacitor C1 and the second bus capacitor C2 is a bus midpoint O. Each of the first rectifier bridge arm 121 and the second rectifier bridge arm 122 is further separately connected to the positive direct current bus BUS+, the negative direct current bus BUS-, and the bus midpoint O. The first bus capacitor C1 is connected to the positive direct current bus BUS+, and the first bus capacitor C1 may also be referred to as a positive bus capacitor. The second bus capacitor C2 is connected to the negative direct current bus BUS-, and the second bus capacitor C2 may also be referred to as a negative bus capacitor. In an embodiment, each of the first rectifier bridge arm 121 and the second rectifier bridge arm 122 includes at least one switching transistor. The switching transistor may be a metal-oxide-semiconductor field-effect transistor (metal-oxide-semiconductor field-effect transistor, MOSFET) or an insulated gate bipolar transistor (insulate-gate bipolar transistor, IGBT).

The controller 11 is configured to first turn off the switching transistor in the multi-phase AC/DC conversion circuit 12, and then turn off the switch K in the multi-phase AC/DC conversion circuit 12. To be specific, when detecting that the current difference between the first current and the second current in the any phase of AC/DC conversion circuit 12 is greater than or equal to the current threshold, the controller 11 can first turn off the switching transistor in each rectifier bridge arm in the multi-phase AC/DC conversion circuit 12, and then turn off the switch K in the multi-phase AC/DC conversion circuit 12.

It may be understood that, the switching transistor in each rectifier bridge arm in the multi-phase AC/DC conversion circuit 12 is turned off, so that a current flowing through each phase of AC/DC conversion circuit 12 can be effectively reduced, thereby reducing the current flowing through the switch K. In this way, damage to the switch K caused by turning off the switch K when a current flowing through the switch K is relatively large may be avoided, thereby ensuring effective fault isolation.

In an embodiment, the switch K in each phase of AC/DC conversion circuit 12 is a relay. It may be understood that when the controller 11 detects that the current difference between the first current and the second current in the any phase of AC/DC conversion circuit 12 is greater than or equal to the current threshold, a current flowing through the switch K (namely, the relay) is relatively large. In this case, if the controller 11 directly turns off the relay, the relay may generate arcing, and consequently, contacts of the relay are stuck. In this embodiment of this application, the controller 11 can first turn off switching transistors in the rectifier bridge arms, so that a current flowing through the relay is effectively reduced, thereby effectively avoiding contact sticking caused by relay breaking under high current conditions. In this way, effective relay breaking can be ensured in all phases of AC/DC conversion circuits 12, thereby implementing effective fault isolation.

In an embodiment, the controller 11 is configured to turn off the switch K in the multi-phase AC/DC conversion circuit 12 when turn-off durations of switching transistors in the first rectifier bridge arm 121 and the second rectifier bridge arm 122 reach a duration threshold.

It may be understood that, after the switching transistor in each rectifier bridge arm in each phase of AC/DC conversion circuit 12 is turned off, a current in each phase of AC/DC conversion circuit 12 can charge a bus capacitor (for example, the first bus capacitor C1 or the second bus capacitor C2). In a process of charging the bus capacitor, a current flowing through the switch K gradually decreases to zero. When the turn-off duration of the switching transistor reaches the duration threshold, a current flowing through the switch K is less than a specific threshold, and the threshold may be less than or equal to a maximum breaking current of the switch K. In this case, the controller 11 further controls all switches K in the multi-phase AC/DC conversion circuit 12 to be turned off, effectively avoiding damage to the switches K.

The duration threshold may be prestored in the controller 11. In addition, the duration threshold may be determined based on parameters of components in each phase of AC/DC conversion circuit 12, a parameter of a bus capacitor, a parameter of the alternating current power supply, and a maximum breakdown current of the switch K.

In an embodiment, the duration threshold may be on an order of magnitude of microseconds, milliseconds, or seconds. Because the duration threshold is relatively small, that is, the controller 11 may turn off the switch K in the multi-phase AC/DC conversion circuit 12 after turning off the switching transistor for a relatively short time. Therefore, it can be ensured that the faulty AC/DC converter is isolated from the alternating current power supply in time, in other words, fast isolation of a single point of failure can be implemented, to effectively protect another AC/DC converter in the system.

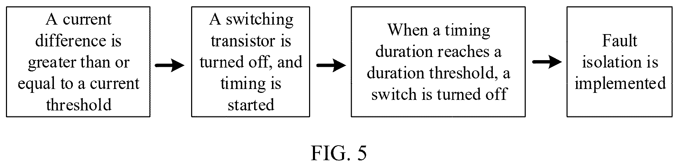

FIG. 5 is a diagram of software protection logic of an AC/DC converter according to an embodiment of this application. It may be learned from FIG. 5 that, when detecting that the current difference in the any phase of AC/DC conversion circuit 12 is greater than or equal to the current threshold, the controller 11 may first turn off the switching transistor through software protection, and start timing. When a timing duration reaches the duration threshold, in other words, when timing is performed until no large current flows through the switch K, the switch K in the multi-phase AC/DC conversion circuit 12 is turned off, to implement fault isolation.

In an embodiment, alternatively, after turning off the switching transistor in the multi-phase AC/DC conversion circuit 12, the controller 11 may detect a current flowing through the switch K in each phase of AC/DC conversion circuit 12, and control the switch K in the multi-phase AC/DC conversion circuit 12 to be turned off when detecting that the current flowing through the switch K in the any phase of AC/DC conversion circuit 12 is less than the maximum breaking current of the switch K. Therefore, damage to the switch K may be effectively avoided, and fast fault isolation may also be ensured.

In an embodiment, after turning off the switching transistor in the multi-phase AC/DC conversion circuit 12, the controller 11 may control the switches K in the multi-phase AC/DC conversion circuit 12 to be turned off when detecting that currents flowing through the switches K in the multi-phase AC/DC conversion circuit 12 are all less than maximum breaking currents of the switches K. Therefore, damage to the switch K in each phase of AC/DC conversion circuit 12 may be effectively avoided.

For example, the controller 11 may directly detect, by using the current detection circuit 13, a current flowing through the switch K in each phase of AC/DC conversion circuit 12. In addition, a current flowing through the switch K in each phase of AC/DC conversion circuit 12 is a sum of the first current and the second current in the phase of AC/DC conversion circuit 12. In addition, it may be understood that, the maximum breaking currents of the switches K in all the phases of AC/DC conversion circuits 12 may be equal.

In an embodiment, the controller 11 is configured to turn off the switch K in the multi-phase AC/DC conversion circuit 12 when the current difference between the first current and the second current in the any phase of AC/DC conversion circuit 12 is greater than or equal to the current threshold, and a voltage difference between a first half-bus voltage and a second half-bus voltage is greater than or equal to a voltage threshold. The voltage difference may be an absolute value of a difference obtained by subtracting the second half-bus voltage from the first half-bus voltage. The first half-bus voltage is a voltage between the positive direct current bus BUS+ and the bus midpoint O, and the second half-bus voltage is a voltage between the negative direct current bus BUS- and the bus midpoint O.

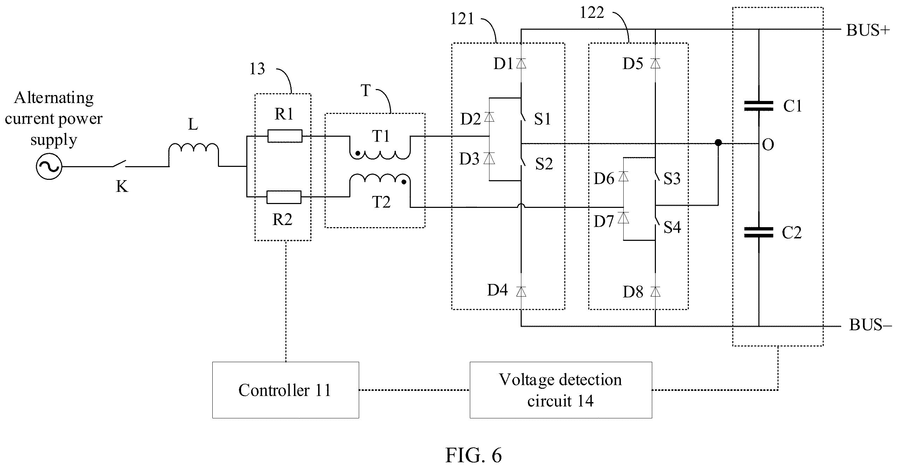

FIG. 6 is a schematic of a local structure of an AC/DC converter according to an embodiment of this application. As shown in FIG. 6, the AC/DC converter may further include a voltage detection circuit 14. The voltage detection circuit 14 may be configured to detect the first half-bus voltage between the positive direct current bus BUS+ and the bus midpoint O, and the second half-bus voltage between the negative direct current bus BUS- and the bus midpoint O. Correspondingly, the controller 11 may obtain the first half-bus voltage and the second half-bus voltage that are detected by the voltage detection circuit 14.

It may be understood that the first half-bus voltage is a voltage at two ends of the first bus capacitor C1, and the second half-bus voltage is a voltage at two ends of the second bus capacitor C2. When each phase of AC/DC conversion circuit 12 runs normally, the first half-bus voltage is equal to or approximately equal to the second half-bus voltage. In other words, in a normal case, a voltage difference between the first half-bus voltage and the second half-bus voltage is zero or close to zero.

When a fault occurs in any phase of AC/DC conversion circuit 12, for example, when a switching transistor in the any phase of AC/DC conversion circuit 12 is short-circuited or open-circuited, a current in the faulty AC/DC conversion circuit 12 charges one of the first bus capacitor C1 and the second bus capacitor C2, and then, this causes an obvious deviation between the first half-bus voltage and the second half-bus voltage. In other words, the voltage difference between the first half-bus voltage and the second half-bus voltage significantly increases. Correspondingly, the controller 11 detects that a voltage difference between the first half-bus voltage and the second half-bus voltage is greater than or equal to the voltage threshold.

It may be understood that the controller 11 may prestore the voltage threshold. In addition, the voltage threshold may be determined based on a change range of the voltage difference between the first half-bus voltage and the second half-bus voltage when each phase of AC/DC conversion circuit 12 runs normally. For example, the voltage threshold is greater than an upper limit of the change range. It may be learned that, when detecting that the voltage difference between the first half-bus voltage and the second half-bus voltage is greater than or equal to the voltage threshold, the controller 11 may determine that a fault occurs in at least one phase of AC/DC conversion circuit 12. Therefore, the controller 11 may turn off the switch K in each phase of AC/DC conversion circuit 12 in time, to isolate the faulty AC/DC converter from the alternating current power supply.

It may be further understood that, if the controller 11 detects, only based on the current difference between the first current and the second current (that is, the difference between the auto-coupled currents), whether a fault occurs in the AC/DC conversion circuit 12, there may be a probability of false detection. Consequently, an action of fail-safe is triggered by mistake. To be specific, the switch K is turned off by mistake. However, in this embodiment of this application, because the controller 11 can use both the difference between the auto-coupled currents and the difference between the half-bus voltages as a reference for fault determining, accuracy of fault detection can be effectively improved, and a probability of false triggering of a fail-safe action can be reduced.

In an embodiment, the voltage threshold Vt is in direct proportion to a difference between a target withstand voltage value V1 and a rated half-bus voltage V2. The difference between the target withstand voltage value V1 and the rated half-bus voltage V2 is a difference obtained by subtracting the rated half-bus voltage V2 from the target withstand voltage value V1, in other words, V1 - V2. The target withstand voltage value V1 may be a smaller value of a withstand voltage value of the first bus capacitor C1 and a withstand voltage value of the second bus capacitor C2. The rated half-bus voltage V2 is a half of a rated voltage between the positive direct current bus BUS+ and the negative direct current bus BUS-, and the rated half-bus voltage V2 is a rated value of a voltage at two ends of each bus capacitor, in other words, a rated voltage of the bus capacitor. The withstand voltage value of the first bus capacitor C1 may be equal to the withstand voltage value of the second bus capacitor C2.

It may be understood that the withstand voltage value of the bus capacitor may be an upper limit of a voltage that the bus capacitor can withstand, and the withstand voltage value may also be referred to as a minimum breakdown voltage of the bus capacitor. In other words, when a voltage at two ends of any bus capacitor exceeds a withstand voltage value of the bus capacitor, there may be a risk of overvoltage breakdown of the bus capacitor.

It may be further understood that the withstand voltage value of the bus capacitor is greater than the rated voltage of the bus capacitor, in other words, greater than the rated half-bus voltage V2. When a fault occurs in any phase of AC/DC conversion circuit, a voltage at two ends of the first bus capacitor or a voltage at two ends of the second bus capacitor or both change relative to the rated half-bus voltage V2. If the changed voltage is less than the target withstand voltage value V1, overvoltage breakdown of the bus capacitor may be avoided. To be specific, for each bus capacitor, if a variation of a voltage at two ends of the bus capacitor relative to the rated half-bus voltage V2 is less than (V1 - V2), overvoltage breakdown of the bus capacitor may be avoided.

It may be learned from the foregoing analysis that, the voltage threshold is set based on the difference (V1 - V2) between the target withstand voltage value and the rated half-bus voltage, so that a fault in each phase of AC/DC conversion circuit 12 may be accurately detected while it is ensured that overvoltage breakdown does not occur in the bus capacitor.

In an embodiment, the voltage threshold Vt may meet Vt/2 < V1 - V2. The expression of the voltage threshold Vt may alternatively be transformed into Vt/2 + V2 < V1 or Vt < 2 × (V1 - V2).

It may be understood that, when a fault occurs in any phase of AC/DC conversion circuit, a voltage at two ends of one of the first bus capacitor and the second bus capacitor rises relative to the rated half-bus voltage V2, and a voltage at two ends of the other bus capacitor drops relative to the rated half-bus voltage V2. Based on this, the voltage threshold Vt < 2 × (V1 - V2) is set, in other words, so that it may be ensured that a switch K in the multi-phase AC/DC conversion circuit 12 is turned off in time before a voltage at two ends of any bus capacitor reaches the target withstand voltage value V1. Therefore, it may be ensured that a voltage at two ends of each bus capacitor is within a tolerance range of the bus capacitor, thereby effectively reducing a risk of overvoltage breakdown of the bus capacitor.

In an embodiment, to further reduce a risk of overvoltage breakdown of the bus capacitor and improve reliability of the AC/DC converter, the voltage threshold Vt may meet Vt/2 < V1 - V2 - $V_{mar}$, and the expression of the voltage threshold Vt may alternatively be transformed into Vt/2 + V2 < V1 - $V_{mar}$. $V_{mar}$ is a preset voltage margin.

It may be understood that the voltage threshold Vt may be reduced by setting the voltage margin $V_{mar}$, so as to effectively ensure that before the switch K in the multi-phase AC/DC conversion circuit 12 is turned off, a voltage at two ends of each bus capacitor is within a tolerance range of the bus capacitor. In other words, a risk of overvoltage breakdown of the bus capacitor can be effectively reduced.

It may be further understood that it takes a specific period of time to charge the bus capacitor. That is, after the controller 11 detects that the current difference between the first current and the second current in the any phase of AC/DC conversion circuit 12 is greater than or equal to the current threshold, it usually takes a specific period of time to detect that the voltage difference between the first half-bus voltage and the second half-bus voltage is greater than or equal to the voltage threshold. Therefore, after detecting that the current difference between the first current and the second current in the any phase of AC/DC conversion circuit 12 is greater than or equal to the current threshold, the controller 11 may first turn off the switching transistor in each phase of AC/DC conversion circuit 12. Then, the voltage difference between the first half-bus voltage and the second half-bus voltage continuously increases due to no control of rectification. When detecting that the voltage difference is greater than or equal to the voltage threshold, the controller 11 may turn off the switch K in each phase of AC/DC conversion circuit 12.

As described above, after the controller 11 turns off the switching transistor in each phase of AC/DC conversion circuit 12, a current flowing through each switch K in the AC/DC converter gradually decreases. Therefore, in this embodiment of this application, a proper component (for example, a bus capacitor and a relay) selection and parameter (for example, a voltage threshold) design may be used to ensure that when the controller 11 detects that the voltage difference between the first half-bus voltage and the second half-bus voltage is greater than or equal to the voltage threshold, the current flowing through the switch K in each phase of AC/DC conversion circuit 12 can be less than the maximum breaking current of the switch K. In this way, it may be ensured that the controller 11 can control the switch K in each phase of AC/DC conversion circuit 12 to be normally turned off, thereby ensuring that a faulty AC/DC converter is effectively isolated.

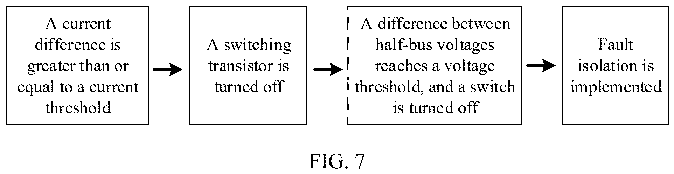

FIG. 7 is a diagram of software protection logic of another AC/DC converter according to an embodiment of this application. It may be learned from FIG. 7 that the controller 11 may continuously detect a current difference in each phase of AC/DC conversion circuit 12, and continuously detect the voltage difference between the first half-bus voltage and the second half-bus voltage. When detecting that the current difference in the any phase of AC/DC conversion circuit 12 is greater than or equal to the current threshold, the controller 11 may first turn off the switching transistor through software protection. When it is detected that the voltage difference between the first half-bus voltage and the second half-bus voltage reaches the voltage threshold, the switch K in each phase of AC/DC conversion circuit 12 is turned off, to implement fault isolation.

In an embodiment, the voltage detection circuit 14 may include a voltage division circuit and an operational amplifier. The voltage division circuit may be configured to perform voltage division on a voltage of the positive direct current bus BUS+ and a voltage of the negative direct current bus BUS-. The operational amplifier is configured to collect, based on an output of the voltage division circuit, the first half-bus voltage between the positive direct current bus BUS+ and the bus midpoint O and the second half-bus voltage between the negative direct current bus BUS- and the bus midpoint O.

In an embodiment, the current detection circuit 13 may include a plurality of detection sub-circuits that are in a one-to-one correspondence with the multi-phase AC/DC conversion circuit 12. As shown in FIG. 4 and FIG. 6, each detection sub-circuit includes a first current sensor R1 and a second current sensor R2. Both the first current sensor R1 and the second current sensor R2 may be shunts.

In addition, with reference to FIG. 4 and FIG. 6, it may be learned that the other end of the inductor L in each phase of AC/DC conversion circuit 12 is connected to one end of the first winding T1 by using the first current sensor R1, and is connected to one end of the second winding T2 by using the second current sensor R2. In other words, the first current sensor R1 is connected in series between the inductor L and the first winding T1, and the second current sensor R2 is connected in series between the inductor L and the second winding T2. Correspondingly, each detection sub-circuit in the current detection circuit 13 can sample an auto-coupled current before the autotransformer T.

Because the change of the auto-coupled current before the autotransformer T is more sensitive, the current sensor in the current detection circuit 13 is connected in series before the autotransformer T, so as to ensure that whether a fault exists in each phase of AC/DC conversion circuit 12 can be detected more accurately and quickly based on the auto-coupled current detected by the current sensor.

Certainly, the first current sensor R1 and the second current sensor R2 in each detection sub-circuit may alternatively be disposed at other positions. For example, the first current sensor R1 may be connected in series between the first winding T1 and the first rectifier bridge arm 121, and the second current sensor R2 may be connected in series between the second winding T2 and the second rectifier bridge arm 122. A position at which the current sensor is located is not limited in this embodiment of this application, provided that the current sensor can sample a current flowing through a winding in the autotransformer T.

It may be understood that, in addition to the current sensor, the current detection circuit 13 may further include another signal processor component. For example, the current detection circuit 13 may further include an operational amplifier and an analog to digital converter (analog to digital converter, ADC). The operational amplifier is configured to amplify a current signal sampled by the current sensor, and the ADC is configured to convert the amplified current signal from an analog signal into a digital signal, and send the digital signal to the controller 11.

In an embodiment, as shown in FIG. 6, each phase of AC/DC conversion circuit 12 in the AC/DC converter may be a three-state switch cell (three-state switch cell, TSSC) circuit. The first rectifier bridge arm 121 in the TSSC circuit may include a diode D1, a diode D2, a diode D3, a diode D4, a switching transistor S1, and a switching transistor S2. The diode D1 to the diode D4 are connected in series and connected between the positive direct current bus BUS+ and the negative direct current bus BUS-, a cathode of the diode D1 is connected to the positive direct current bus BUS+, an anode of the diode D4 is connected to the negative direct current bus BUS-, and a series connection node between the diode D2 and the diode D3 is connected to the other end of the first winding T1 in the autotransformer T. The switching transistor S1 and the switching transistor S2 are connected in series, and the switching transistor S1 and the switching transistor S2 connected in series to form one end that is connected to an anode of the diode D1 (that is, a cathode of the diode D2), and to form the other end that is connected to a cathode of the diode D4 (that is, an anode of the diode D3). A series connection node between the switching transistor S1 and the switching transistor S2 is connected to the bus midpoint O.

Still with reference to FIG. 6, the second rectifier bridge arm 122 in the TSSC circuit may include a diode D5, a diode D6, a diode D7, a diode D8, a switching transistor S3, and a switching transistor S4. The diode D5 to the diode D8 are connected in series and connected between the positive direct current bus BUS+ and the negative direct current bus BUS-, a cathode of the diode D5 is connected to the positive direct current bus BUS+, an anode of the diode D8 is connected to the negative direct current bus BUS-, and a series connection node between the diode D6 and the diode D7 is connected to the other end of the second winding T2 in the autotransformer T. The switching transistor S3 and the switching transistor S4 are connected in series, and the switching transistor S3 and the switching transistor S4 connected in series to form one end that is connected to an anode of the diode D5 (that is, a cathode of the diode D6), and to form the other end that is connected to a cathode of the diode D8 (that is, an anode of the diode D7). A series connection node between the switching transistor S3 and the switching transistor S4 is further connected to the bus midpoint O.

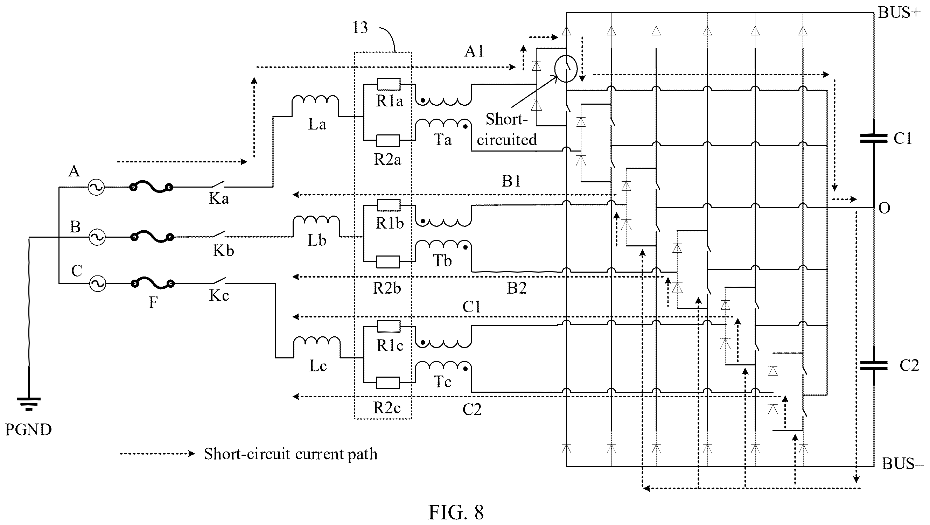

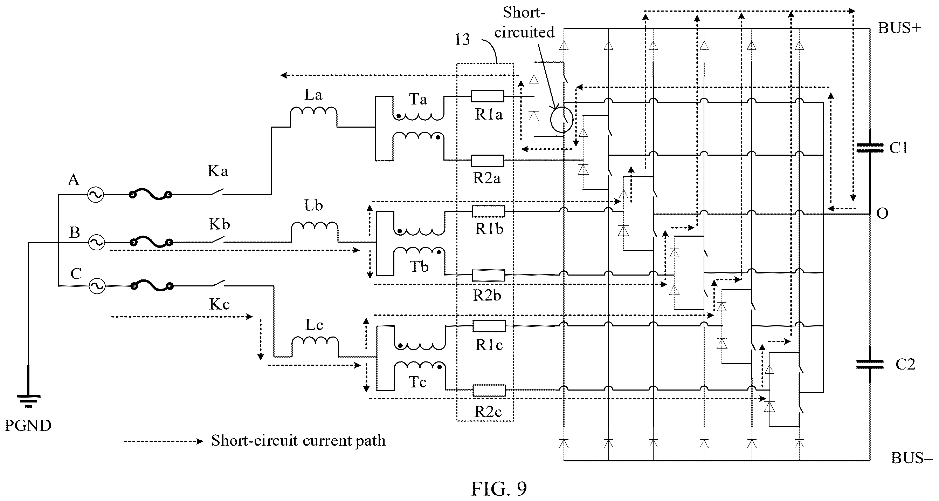

In a scenario in which the AC/DC converter includes the three-phase AC/DC conversion circuit 12, with reference to FIG. 8 and FIG. 9, the current detection circuit 13 may include three groups of detection sub-circuits that are in a one-to-one correspondence with the three-phase AC/DC conversion circuit 12. Each group of detection sub-circuit includes two current sensors, and the two current sensors are configured to sample the first current flowing through the first winding T1 and the second current flowing through the second winding T2 in a corresponding one phase of AC/DC conversion circuit 12.

For example, as shown in FIG. 8 and FIG. 9, one group of detection sub-circuit corresponding to a phase-A AC/DC conversion circuit 12 includes a current sensor R1a and a current sensor R2a. One group of detection sub-circuit corresponding to a phase-B AC/DC conversion circuit 12 includes a current sensor R1b and a current sensor R2b. One group of detection sub-circuit corresponding to a phase-C AC/DC conversion circuit 12 includes a current sensor R1c and a current sensor R2c. The current sensor R1a may be configured to sample the first current (also referred to as a phase current A1) that flows through the first winding in the phase-A AC/DC conversion circuit 12, and the current sensor R2a may be configured to sample the second current (also referred to as a phase current A2) that flows through the second winding in the phase-A AC/DC conversion circuit 12. The current sensor R1b may be configured to sample the first current (also referred to as a phase current B1) that flows through the first winding in the phase-B AC/DC conversion circuit 12, and the current sensor R2b may be configured to sample the second current (also referred to as a phase current B2) that flows through the second winding in the phase-B AC/DC conversion circuit 12. The current sensor R1c may be configured to sample the first current (also referred to as a phase current C1) that flows through the first winding in the phase-C AC/DC conversion circuit 12, and the current sensor R2c may be configured to sample the second current (also referred to as a phase current C2) that flows through the second winding in the phase-C AC/DC conversion circuit 12.

It may be learned from FIG. 8 and FIG. 9 that, each current sensor included in the current detection circuit 13 may be connected in series between the inductor L and the autotransformer T (in other words, connected in series before the autotransformer T), or may be connected in series between the autotransformer T and the rectifier bridge arm (in other words, connected in series after the autotransformer T).

The following uses topologies shown in FIG. 8 and FIG. 9 as an example to describe a fault generated in the AC/DC converter.

With reference to FIG. 8, it is assumed that a switching transistor S1 (also referred to as an upper transistor) in the first rectifier bridge arm 121a in the phase-A AC/DC conversion circuit 12 is short-circuited. Then, when a phase-A alternating current is positive, and both a phase-B alternating current and a phase-C alternating current are negative, a current path of a short-circuit current shown in FIG. 9 is formed in the AC/DC converter. It may be learned from FIG. 9 that, after flowing through a switch Ka, an inductor La, a first winding in an autotransformer Ta, a diode D1 in the first rectifier bridge arm, and the short-circuited switching transistor S1 in the phase-A AC/DC conversion circuit 12, the short-circuit current flows to the bus midpoint O, and then flows to the phase-B AC/DC conversion circuit 12 and the phase-C AC/DC conversion circuit 12 separately through the second bus capacitor C2.

It may be learned from FIG. 8 that, because the switching transistor S1 in the first rectifier bridge arm 121a is short-circuited, most of the current flowing from the inductor La flows to the switching transistor S1 through the first winding T1a in the autotransformer Ta. In other words, in this case, the first current (namely, the phase current A1) flowing through the first winding T1a in the autotransformer Ta is far greater than the second current (namely, the phase current A2) flowing through the second winding T2a in the autotransformer Ta. For example, in this case, the second current flowing through the second winding T2a in the autotransformer Ta is approximately 0. Correspondingly, the controller 11 can detect that a current difference between the first current and the second current in the phase-A AC/DC conversion circuit 12 is greater than or equal to a difference threshold, and may first turn off each switching transistor in the three-phase AC/DC conversion circuit 12. In addition, because the phase current A1 charges the second bus capacitor C2, a voltage at two ends of the second bus capacitor C2 is far greater than a voltage at two ends of the first bus capacitor C1. Therefore, the controller 11 can detect that a voltage difference between a first half-bus voltage and a second half-bus voltage is greater than or equal to a voltage threshold, and can turn off the switch Ka, the switch Kb, and the switch Kc in the three-phase AC/DC conversion circuit 12. It may be understood that, in a short-circuit scenario shown in FIG. 8, the phase current B1 may be equal to the phase current B2, and the phase current C1 may be equal to the phase current C2.

With reference to FIG. 9, it is assumed that a switching transistor S2 (also referred to as a lower transistor) in the first rectifier bridge arm 121a in the phase-A AC/DC conversion circuit 12 is short-circuited. Then, when both a phase-C alternating current and a phase-B alternating current are positive, and a phase-A alternating current is negative, a current path of a short-circuit current shown in FIG. 9 is formed in the AC/DC converter. It may be learned from FIG. 9 that, after flowing through the switch Kc, an inductor Lc, an autotransformer Tc, and a rectifier bridge arm that are in the phase-C AC/DC conversion circuit 12, the short-circuit current flows to the positive direct current bus BUS+, and after flowing through the switch Kb, an inductor Lb, an autotransformer Tb, and a rectifier bridge arm that are in the phase-B AC/DC conversion circuit 12, the short-circuit current flows to the positive direct current bus BUS+. Then, the current flows through the first bus capacitor C1 to a short-circuited switching transistor S2 in the phase-A AC/DC conversion circuit 12, then flows through the diode D3, the second winding T2a in the autotransformer Ta, the inductor La, and the switch Ka, and flows back to the alternating current power supply.

It may be learned from FIG. 9 that, because the switching transistor S2 in the first rectifier bridge arm 121 in the phase-A AC/DC conversion circuit 12 is short-circuited, most of the current flowing from the first bus capacitor C1 flows to the first winding in the autotransformer Ta through the switching transistor S2. In other words, in this case, the first current flowing through the first winding T1a in the autotransformer Ta is far greater than the second current flowing through the second winding in the autotransformer Ta. For example, in this case, the current flowing through the second winding in the autotransformer Ta is approximately 0. Correspondingly, the controller 11 can detect that a current difference between the first current and the second current is greater than or equal to a difference threshold, and may first turn off each switching transistor in the three-phase AC/DC conversion circuit 12. In addition, because the current flowing from the phase-C AC/DC conversion circuit 12 charges the first bus capacitor C1, a voltage at two ends of the first bus capacitor C1 is far greater than a voltage at two ends of the second bus capacitor C2. Therefore, the controller 11 can detect that a voltage difference between a first half-bus voltage and a second half-bus voltage is greater than or equal to a voltage threshold, and can turn off the switch Ka, the switch Kb, and the switch Kc in the three-phase AC/DC conversion circuit 12. It may be understood that, in a short-circuit scenario shown in FIG. 9, the phase current B1 may be equal to the phase current B2. In addition, the phase current C1 may be equal to the phase current C2.

It may be further understood that, in the short-circuit scenario shown in FIG. 9, when the phase-B alternating current is positive, and both the phase-A alternating current and the phase-C alternating current are negative, the short-circuit current flows from the phase-B AC/DC conversion circuit 12 to the positive direct current bus BUS+, and then flows to the phase-A AC/DC conversion circuit 12 through the first bus capacitor C1. In this case, the phase current C1 and the phase current C2 may be 0. Alternatively, when the phase-C alternating current is positive, and both the phase-A alternating current and the phase-B alternating current are negative, the short-circuit current flows from the phase-C AC/DC conversion circuit 12 to the positive direct current bus BUS+, and then flows to the phase-A AC/DC conversion circuit 12 through the first bus capacitor C1. In this case, the phase current B1 and the phase current B2 may be 0.

The foregoing is described by using an example in which the upper transistor or the lower transistor in the first rectifier bridge arm 121 in the phase-A AC/DC conversion circuit 12 is short-circuited. It may be understood that, for a path of a short-circuit current generated when another switching transistor is short-circuited, refer to related descriptions in FIG. 8 and FIG. 9. Details are not described in this embodiment of this application. In addition, it may be further understood that, when an upper transistor or a lower transistor in a first rectifier bridge arm 121 in any phase of AC/DC conversion circuit 12 is short-circuited, in the phase of AC/DC conversion circuit 12, a first current flowing through the first winding T1 in the autotransformer T is far greater than a second current flowing through the second winding T2 in the autotransformer T. When an upper transistor or a lower transistor in a second rectifier bridge arm 122 in any phase of AC/DC conversion circuit 12 is short-circuited, in the phase of AC/DC conversion circuit 12, a second current flowing through the second winding T2 in the autotransformer T is far greater than a first current flowing through the first winding T1 in the autotransformer T. Correspondingly, the controller 11 can determine, based on a fact that a current difference between the first current and the second current in any phase of AC/DC conversion circuit 12 is greater than or equal to a current threshold, that a fault (for example, a short-circuit fault) exists in the phase of AC/DC conversion circuit 12. In this way, the controller 11 can first turn off the switching transistor in each phase of AC/DC conversion circuit 12, and then turn off the switch K in each phase of AC/DC conversion circuit 12.

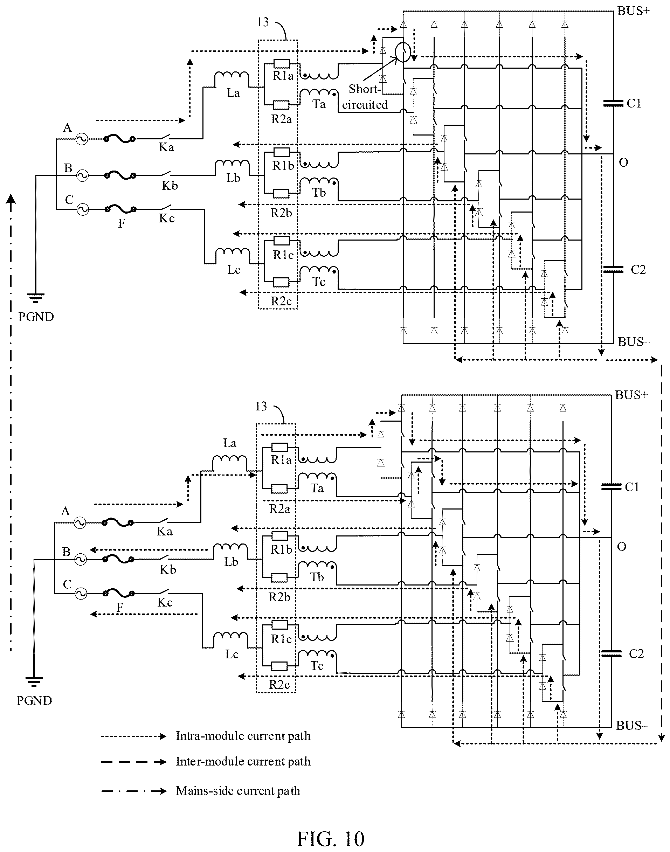

It may be understood that, in a scenario in which the AC/DC converter is applied to a non-isolation architecture, after a short-circuit fault occurs in any AC/DC converter, if fault isolation is not performed, a fault spreads to another AC/DC converter. For example, with reference to FIG. 10, FIG. 10 shows a current loop path between modules (to be specific, between different AC/DC converters) by using an example in which a phase A is positive and a phase B and a phase C are negative. It may be learned from dashed line arrows in FIG. 10 that, in the non-isolation architecture, an intra-module current path, an inter-module current path, and a mains-side current path form a current loop path. After a fault (for example, a short-circuit fault) occurs in any AC/DC converter, a fault current in the AC/DC converter spreads out along the current loop path, and this causes damage to a component in another AC/DC converter, and even causes a breakdown of a system (for example, the charging device).

In this embodiment of this application, after detecting that there is a fault in any phase of AC/DC conversion circuit 12, the controller 11 in the AC/DC converter can turn off the switch K in each phase of AC/DC conversion circuit 12. Therefore, the faulty AC/DC conversion circuit 12 can be isolated from the alternating current power supply, and then, the faulty AC/DC conversion circuit 12 can be effectively isolated from another AC/DC converter in the system (for example, the charging device).

In addition, with reference to FIG. 6 to FIG. 10, it may be learned that, in the solution provided in embodiments of this application, the AC/DC conversion circuit 12 uses a TSSC topology. Because diodes D1, D4, D5, and D8 in the TSSC topology have a function of stopping a reverse current, it may be ensured that no current loop phenomenon occurs between a faulty AC/DC converter and another normal AC/DC converter, and fault spreading can be effectively avoided.

It may be further understood that a PGND in FIG. 8 and FIG. 9 means a power ground (power ground, PGND) wire. In conclusion, embodiments of this application provide an AC/DC converter. The AC/DC converter includes a controller and a multi-phase AC/DC conversion circuit. In each phase of AC/DC conversion circuit, a current flowing through a first winding of an autotransformer is a first current, and a current flowing through a second winding of the autotransformer is a second current. When a current difference between the first current and the second current in any phase of AC/DC conversion circuit is greater than or equal to a current threshold, the controller can determine that a fault exists in the phase of AC/DC conversion circuit, and then turn off a switch in each phase of AC/DC conversion circuit. Therefore, the faulty AC/DC converter can be disconnected from the alternating current power supply, so as to isolate the faulty AC/DC converter from other normal AC/DC converters, thereby avoiding fault spreading.

In addition, in the solution provided in embodiments of this application, fault detection can be implemented based on a current flowing through the autotransformer, and fault isolation can be implemented by turning off the switch in the AC/DC conversion circuit. Therefore, there is no need to additionally add a power switching device to the AC/DC converter, thereby effectively avoiding increasing structural complexity and hardware costs of the AC/DC converter. In addition, compared with a fuse solution, in the solution provided in embodiments of this application, when fault isolation is performed, AC/DC converters do not need to cooperate with each other, implementation complexity thereof is relatively low, and a requirement on a current equalization coefficient of the system is relatively low.

An embodiment of this application further provides a charging device. The charging device may be a charging pile. As shown in FIG. 1 and FIG. 2, the charging device includes an AC/DC converter 10, a DC/DC converter 20, and a charging connector 30 that are provided in the foregoing embodiments. An output end (that is, a direct current end) of the AC/DC converter 10 is connected to the charging connector 30 through the DC/DC converter 20. An input end (that is, an alternating current end) of the AC/DC converter 10 is configured to be connected to an alternating current power supply, and the AC/DC converter 10 is configured to convert an alternating current provided by the alternating current power supply into a direct current. The DC/DC converter 20 is configured to perform voltage conversion on the direct current, and output a converted direct current to the charging connector 30, to charge an electric vehicle connected to the charging connector 30.

In an embodiment, as shown in FIG. 1 and FIG. 2, the charging device may include a plurality of AC/DC converters 10. In addition, as shown in FIG. 1, output ends of the plurality of AC/DC converters 10 may be connected in parallel to a direct current bus. Ends of the plurality of DC/DC converters 20 are also connected in parallel to the direct current bus. Alternatively, as shown in FIG. 2, an output end of each AC/DC converter 10 may be directly connected to one end of one DC/DC converter 20, in other words, the AC/DC converter 10 does not need to be connected to the DC/DC converter 20 through the direct current bus. Alternatively, the AC/DC converter 10 may further integrate a function of a DC/DC converter, in other words, the AC/DC converter 10 not only can perform conversion between an alternating current and a direct current, but also can implement voltage conversion of a direct current. Accordingly, the DC/DC converter 20 may not need to be separately disposed in the charging device.

In an embodiment, still with reference to FIG. 1 and FIG. 2, the charging device may further include a power allocation module 40. One end of the power allocation module 40 is connected to the other ends of the plurality of DC/DC converters 20, and the other end of the power allocation module 40 is connected to the plurality of charging connectors 30.

It may be understood that, in addition to being applied to the charging device (for example, a charging pile), the solution provided in the embodiments of this application may be further applied to another field, for example, may be further applied to an inverter in a photovoltaic system, or may be further applied to an energy storage converter in an energy storage system.

In embodiments of this application, the terms "first" and "second" are merely intended for description, and shall not be understood as an indication or implication of relative importance. The term "at least one" means one or more, and "a plurality of" means two or more.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. An AC/DC converter, wherein the AC/DC converter comprises a controller and a multi-phase AC/DC conversion circuit, each phase of AC/DC conversion circuit comprises a switch, an inductor, an autotransformer, a first rectifier bridge arm, and a second rectifier bridge arm, and the autotransformer comprises a first winding and a second winding;

   one end of the switch is configured to be connected to an alternating current power supply, the other end of the switch is connected to one end of the inductor, the other end of the inductor is separately connected to one end of the first winding and one end of the second winding, the other end of the first winding is connected to the first rectifier bridge arm, and the other end of the second winding is connected to the second rectifier bridge arm; and
   the controller is configured to turn off the switch in the multi-phase AC/DC conversion circuit when a current difference between a first current and a second current in any phase of AC/DC conversion circuit is greater than or equal to a current threshold, wherein
   the first current is a current flowing through the first winding in the any phase of AC/DC conversion circuit, and the second current is a current flowing through the second winding in the any phase of AC/DC conversion circuit.

2. The AC/DC converter according to claim 1, wherein the current threshold is greater than or equal to 1/10 of a current flowing through the autotransformer when the AC/DC converter outputs a rated power, and the current flowing through the autotransformer is a sum of the current flowing through the first winding and the current flowing through the second winding.

3. The AC/DC converter according to claim 1 or 2, wherein each of the first rectifier bridge arm and the second rectifier bridge arm comprises at least one switching transistor; and
   the controller is configured to first turn off the switching transistor in the multi-phase AC/DC conversion circuit, and then turn off the switch in the multi-phase AC/DC conversion circuit.

4. The AC/DC converter according to claim 3, wherein the controller is configured to turn off the switch in the multi-phase AC/DC conversion circuit when a turn-off duration of the switching transistor reaches a duration threshold.

5. The AC/DC converter according to claim 4, wherein the duration threshold is on an order of magnitude of microseconds, milliseconds, or seconds.

6. The AC/DC converter according to claim 3, wherein the controller is configured to: after turning off the switching transistor in the multi-phase AC/DC conversion circuit, turn off the switch in the multi-phase AC/DC conversion circuit when a current flowing through the switch in any phase of AC/DC conversion circuit is less than a maximum breaking current of the switch.

7. The AC/DC converter according to claim 3, wherein the controller is configured to: after turning off the switching transistor in the multi-phase AC/DC conversion circuit, turn off the switch in the multi-phase AC/DC conversion circuit when a current flowing through the switch in each phase of AC/DC conversion circuit is less than a maximum breaking current of the switch.

8. The AC/DC converter according to any one of claims 1 to 3, wherein the AC/DC converter further comprises a positive direct current bus, a negative direct current bus, a first bus capacitor, and a second bus capacitor;

   each of the first rectifier bridge arm and the second rectifier bridge arm is further separately connected to the positive direct current bus and the negative direct current bus, and the first bus capacitor and the second bus capacitor are connected in series and connected between the positive direct current bus and the negative direct current bus; and

the controller is configured to turn off the switch in the multi-phase AC/DC conversion circuit when the current difference between the first current and the second current in the any phase of AC/DC conversion circuit is greater than or equal to the current threshold, and a voltage difference between a first half-bus voltage and a second half-bus voltage is greater than or equal to a voltage threshold, wherein

the first half-bus voltage is a voltage between the positive direct current bus and a bus midpoint, the second half-bus voltage is a voltage between the negative direct current bus and the bus midpoint, and the bus midpoint is a series connection node between the first bus capacitor and the second bus capacitor.

9. The AC/DC converter according to claim 8, wherein the voltage threshold Vt meets Vt/2 < V1 - V2, wherein

V1 is a smaller value of a withstand voltage value of the first bus capacitor and a withstand voltage value of the second bus capacitor, V2 is a rated half-bus voltage, and the rated half-bus voltage is half of a rated voltage between the positive direct current bus and the negative direct current bus.

10. A charging device, wherein the charging device comprises the AC/DC converter according to any one of claims 1 to 9, a DC/DC converter, and a charging connector, and an output end of the AC/DC converter is connected to the charging connector through the DC/DC converter.

FIG. 1

FIG. 2

Single point
of failure

Fuse

| | | | | | |
|---|---|---|---|---|---|
| AC/DC converter 10 | | | DC/DC converter 20 | | |

| AC/DC converter 10 | | DC/DC converter 20 |
|---|---|---|

| AC/DC converter 10 | | DC/DC converter 20 |
|---|---|---|

DC/DC converter 20

DC/DC converter 20

FIG. 3

FIG. 4

| A current difference is greater than or equal to a current threshold | → | A switching transistor is turned off, and timing is started | → | When a timing duration reaches a duration threshold, a switch is turned off | → | Fault isolation is implemented |

FIG. 5

FIG. 6

EP 4 783 442 A1

| A current difference is greater than or equal to a current threshold | → | A switching transistor is turned off | → | A difference between half-bus voltages reaches a voltage threshold, and a switch is turned off | → | Fault isolation is implemented |

FIG. 7

FIG. 8

FIG. 9

Short-circuited

Intra-module current path

Inter-module current path

Mains-side current path

FIG. 10

Europäisches
Patentamt
European
Patent Office
Office européen
des brevets

# EUROPEAN SEARCH REPORT

**Application Number**

EP 26 15 1815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/250678 A1 (HUAWEI DIGITAL POWER TECH CO LTD [CN]) 12 December 2024 (2024-12-12) * abstract * & EP 4 716 084 A1 (HUAWEI DIGITAL POWER TECH CO LTD [CN]) 25 March 2026 (2026-03-25) * abstract * * paragraph [0001] - paragraph [0128]; figures 1-13 * ----- | 1-10 | INV. H02M1/32 H02M7/219 H02H3/26 H02H3/36 ADD. H02M1/00 H02M7/487 H02H3/38 |
| A | KR 101 152 050 B1 (LEE DONG HO [KR]; HOKMAH TECH CO LTD [KR]) 31 May 2012 (2012-05-31) * abstract * * figures 1-5 * ----- | 1-10 | |

**TECHNICAL FIELDS SEARCHED (IPC)**

H02M
H02H

The present search report has been drawn up for all claims

| Place of search | Date of completion of the search | Examiner |
|---|---|---|
| The Hague | 15 April 2026 | Adami, Salah-Eddine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 26 15 1815

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | | Publication date | Patent family member(s) | | Publication date |
|---|---|---|---|---|---|
| WO 2024250678 | A1 | 12-12-2024 | CN | 116800080 A | 22-09-2023 |
| | | | EP | 4716084 A1 | 25-03-2026 |
| | | | US | 20260088712 A1 | 26-03-2026 |
| | | | WO | 2024250678 A1 | 12-12-2024 |
| KR 101152050 | B1 | 31-05-2012 | NONE | | |

EPO FORM P0459

For more details about this annex : see Official Journal of the European Patent Office, No. 12/82